# EUROPÄISCHE PATENTSCHRIFT

(11) **EP 2 818 362 B1**
(45) Veröffentlichungstag und Bekanntmachung des Hinweises auf die Patenterteilung: **14.08.2019**
(21) Anmeldenummer: 14001994.4
(22) Anmeldetag: 10.06.2014
(51) Int. Cl.: B60P 1/44

(54) **Hubladebühne**
Cantilever lift
Plate-forme de chargement par levage

(30) Priorität: 25.06.2013 DE 102013010526
(43) Veröffentlichungstag der Anmeldung: 31.12.2014
(73) Patentinhaber: Palfinger Tail Lifts GmbH, 27777 Ganderkesee (DE)
(72) Erfinder: Rulfs, Eike, 27804 Berne (DE); Bretschneider, Peter, 28730 Schwanewede (DE)
(74) Vertreter: Möller, Friedrich

(56) Entgegenhaltungen:
- EP-A1- 1 000 802
- EP-A1- 1 162 111
- FR-A1- 2 760 216

## Beschreibung

Die Erfindung betrifft eine Hubladebühne gemäß dem Oberbegriff des Anspruchs 1.

Hubladebühnen dienen dazu, das Be- und Entladen von Fahrzeugen mit insbesondere schweren Gegenständen zu erleichtern. Solche Hubladebühnen verfügen über eine vorzugsweise an der Rückseite eines Aufbaus eines Fahrzeugs schwenk-, heb- und senkbar angelenkte Ladeplattform.

Eine besondere Art Hubladebühne ist eine solche, die im Ruhezustand unter einen rückwärtigen Bereich des Fahrzeugs unterziehbar ist. Dazu weist die Hubladebühne Schienen auf, an denen sie in der Ruhestellung unter den Heckbereich des Fahrzeugs unterziehbar ist und in der Betriebsstellung nach hinten ausgefahren werden kann, so dass die Ladeplattform hinter dem Aufbau des Fahrzeugs verschwenkt, angehoben und abgesenkt werden kann. In der Regel verfügen solche unterziehbaren Hubladebühnen auch über eine mehrteilige, zusammenfalbare Ladeplattform. Durch das Zusammenfalten ist die Ladeplattform in Fahrtrichtung des Fahrzeugs gesehen verkürzbar, wodurch der Weg zum Unterfahren der Hubladebühne unter den Heckbereich des Fahrzeugs sich verringert.

Die Hubladebühne wird mit ihren beiden parallelen, längs zur Fahrtrichtung verlaufenden Schienen an parallelen Längsträgern des Chassis des Fahrzeugs befestigt. Das erfolgt bei der FR 2 760 216 A1 nur durch Schrauben und bei der EP 1 162 111 A1 entweder nur durch Schrauben oder nur durch Klammern bzw. Klemmen an Chassis. Dieses macht es erforderlich, bei der Montage nur durch Schrauben am Fahrzeug Löcher an geeigneten Stellen der Längsträger des Fahrzeugs zu bohren. Das ist aufwendig und beschädigt den Oberflächenschutz der Längsträger. Außerdem kann es beim Bohren der Löcher zu Ungenauigkeiten kommen, was Nacharbeiten notwendig macht. Dadurch wird die Montage solcher Hubladebühnen am Fahrzeug wesentlich erschwert. Eine nur mit Klammern oder Klemmen erfolgende Befestigung der Hubladebühne kann unzureichend sein.

Der Erfindung liegt die Aufgabe zugrunde, eine Hubladebühne zu schaffen, die sich einfach am Fahrzeug montieren lässt und eine zuverlässige Befestigung der Hubladebühne am Fahrzeug gewährleistet.

Eine Hubladebühne zur Lösung dieser Aufgabe weist die Merkmale des Anspruchs 1 auf. Demnach ist vorgesehen, die Hubladebühne so auszubilden, dass die Schienen teilweise durch Klammern am Chassis des Fahrzeugs befestigbar sind. Durch das Klammern kann die Hubladebühne am Fahrzeug mit reduzierter Anzahl von Bohrungen im Chassis, insbesondere den Längsträgern desselben, montiert werden. Das Klammern hat auch den Vorteil, dass damit unterschiedliche Relativpositionen zwischen den Längsträgern des Chassis und den Schienen der Hubladebühne einfach ausgeglichen werden können. Das Klammern kann auf verschiedene Weisen erfolgen, vorzugsweise reib- und/oder kraftschlüssig. Die hinteren Enden der Schienen sind nicht durch Klammern, sondern in konventioneller Weise durch Schrauben mit insbesondere den Längsträgern des Chassis verbunden. Das erweist sich als vorteilhaft, weil die hinteren Enden der Schienen bei sich in Betriebsstellung befindlicher Ladeplattform mit einer abwärtsgerichteten Kraft beaufschlagt werden, die zuverlässiger von Schraubenverbindungen aufgenommen werden kann. Gleichwohl ist die Montage der Hubladebühne schon dann einfacher, wenn nur die vorderen Enden und gegebenenfalls auch ein mittlerer Bereich der Schienen durch Klammern am Chassis des Fahrzeugs befestigt werden, weil nach dem Klammern die noch unbelastete Hubladebühne schon so weit am Chassis vormontiert ist, dass sie ausgerichtet werden kann. Danach lassen sich die Bohrungen zum Verschrauben mindestens der hinteren Enden der Schienen mit dem Chassis, insbesondere den Längsträgern desselben, viel einfacher und vor allem positionsgenau herstellen, als das bei der bisherigen ausschließlich durch Schrauben erfolgenden Montage der Hubladebühne am Fahrzeug der Fall ist.

Bevorzugt ist es vorgesehen, die in Fahrtrichtung des Fahrzeugs verlaufenden parallelen Schienen an mehreren über die Längsrichtung jeder Schiene verteilten Stellen mit dem Chassis, insbesondere den Längsträgern desselben, zu verbinden und dabei mindestens jede Schiene im Bereich eines in Fahrtrichtung vornliegenden (zu den Vorderrädern des Fahrzeugs weisenden) Endes durch Klammern am Chassis bzw. dem jeweiligen Längsträger zu verbinden. Hierbei wird von der Erkenntnis ausgegangen, dass bei Belastung der über den hinteren Enden der Schienen in der Betriebsstellung nach hinten vorstehenden Ladeplattform die vornliegenden Enden mit einer nach oben gerichteten Kraft beaufschlagt werden. Dadurch drücken die Schienen bzw. zur Montage derselben dienenden Anbauteile von unten gegen das Chassis, insbesondere die Längsträger. Hierdurch wirkt auf die Klammern der Schienen an den vorderen Enden keine oder keine nennenswerte Kraft, die von der sich in der Betriebsstellung befindenden Hubladebühne ausgeht. Die Belastbarkeit der Hubladebühne wird somit durch das Klammern nicht reduziert.

Bei Fahrzeugen, bei denen die Längsträger des Chassis als einseitig offene C-Profile aus einem vertikalen Steg und zwei parallelen horizontalen Schenkeln gebildet und die offenen Seite der C-Profile bzw. die freien Längskanten der Schenkel zueinandergerichtet sind, ist es bei einer bevorzugten Ausgestaltung der Hubladebühne vorgesehen, die Schienen an den unteren Schenkeln der C-Profile der Längsträger vorzunehmen, und zwar vorzugsweise von den offenen Seiten aus, also über die freien Längskanten der unteren Schenkel der Längsträger hinweg. Diese Art der Befestigung der Hubladebühne am Chassis des Fahrzeugs lässt sich besonders einfach durch Klemmen realisieren.

Gemäß einer vorteilhaften Weiterbildung der Erfindung ist es vorgesehen, am freien vorderen Endbereich jeder Schiene ein Endstück zu befestigen. Mit dem jeweiligen Endstück erfolgt die Befestigung der diesem zugeordneten Schiene am entsprechenden Längsträger durch Klemmen. Durch die Endstücke können die Befestigungsstellen der Schienen an geeignete Stellen verlegt werden, beispielsweise zu den freien Längskanten der Schenkel der C-förmigen Längsträger des Chassis.

Bevorzugt weist jedes Endstück zwei quer zur Fahrtrichtung vorzugsweise höhenversetzt nebeneinanderliegende Schraubplatten auf. Eine Schraubplatte ist zur Verbindung des Endstücks mit der Schiene vorgesehen. Die andere Schraubplatte dient zur klemmenden Befestigung des Endstücks mit der diesem zugeordneten Schiene am entsprechenden Längsträger, vorzugsweise einem unteren Schenkel desselben. Durch entsprechende Gestaltung der Endstücke können die Schraubplatten geeignete Größen und Relativanordnungen zueinander aufweisen, um die jeweilige Schiene an der gewünschten Stelle neben dem dazugehörenden Längsträger, vorzugsweise parallel verlaufend zu demselben, anzuordnen.

Nach einer bevorzugten Ausgestaltung der Erfindung dient zur klemmenden Befestigung der jeweiligen Schiene bzw. dem dieser zugeordneten Endstück jeweils mindestens eine Pratze, die an der zur klemmenden Befestigung der Hubladebühne am jeweiligen Längsträger des Fahrzeugs dienenden Schraubplatte vorzugsweise durch Anschrauben befestigbar ist. Zwischen der Schraubplatte und der mindestens einen Pratze erfolgt die klemmende Verbindung der jeweiligen Schiene der Hubladebühne mit dem dazugehörenden Längsträger, und zwar insbesondere dem unteren, horizontalen Schenkel desselben.

Vorteilhafterweise ist es vorgesehen, die jeweilige Pratze mindestens quer zur Fahrtrichtung in unterschiedlichen Positionen, vorzugsweise stufenlos veränderbaren Positionen, an der Schraubplatte zu befestigen. Beispielsweise kann für jede Pratze ein Langloch in der dazugehörenden Schraubplatte vorgesehen sein, durch das mindestens eine Schraube zum Verbinden der jeweiligen Pratze mit der Schraubplatte verläuft. Dadurch ist eine Anpassung an die jeweiligen Gegebenheiten, beispielsweise zum Toleranzausgleich, möglich. Durch entsprechende Vorspannung der mindestens einen Schraube ist ein sicheres Festklemmen der Hubladebühne am Fahrzeug gewährleistet, insbesondere lässt sich so die erforderliche Klemmkraft durch entsprechend dimensionierte und vorgespannte Schrauben erzeugen, was zu einer haltbaren Befestigung der Hubladebühne am Fahrzeug führt.

Eine weitere vorteilhafte Ausgestaltung der Hubladebühne sieht es vor, dass die beiden Schienen, vorzugsweise die an denselben befestigten Endstücke, durch einen Querträger verbunden sind. Bevorzugt befindet sich der Querträger an denjenigen Endstücken, die zur klemmenden Verbindung der vorderen Enden der Schienen mit den Längsträgern des Chassis des Fahrzeugs dienen. Der Querträger sichert zusätzlich die reib- oder formschlüssige Klemmverbindung der betreffenden Endstücke. Insbesondere dann, wenn die offenen Mäuler der Pratzen zum Festklemmen der Schienen am Fahrzeug entgegengesetzt nach außen weisen, sorgt der Querträger dafür, dass sich die Pratzen nicht zusammen bewegen und dadurch lösen können. Außerdem stabilisiert der Querträger die Position der Schienen neben den Längsträgern des Chassis.

Vorzugsweise sind gegenüberliegende Endbereiche des Querträgers mit jeweils einem der gegenüberliegenden Schienen zugeordneten Endstücke verbunden, und zwar bevorzugt klemmend. Dadurch stabilisiert der Querträger die Endstücke, die die Kräfte der von den Pratzen an den Längsträgern festgeklemmten Schienen der Hubladebühne aufnehmen.

Eine andere bevorzugte Ausgestaltung der Hubladebühne sieht es vor, die Schienen außen neben den Längsträgern des Fahrzeugs zu befestigen. Dadurch weisen die Schienen einen größeren Abstand als die Längsträger auf, wodurch sie eine stabilere Führung der unter den Heckbereich des Fahrzeugs unterziehbaren und ausfahrbaren Hubladebühne gewährleisten. Bei außen neben den Längsträgern befestigten Schienen erfolgt das Festklammern mindestens der vorderen Enden der Schienen, gegebenenfalls aber auch weiter mittig sich befindende Stellen der Schienen, an den Längsträgern von den offenen Innenseiten der als C-Profile ausgebildeten Längsträger. Infolge der außen neben den Längsträgern liegenden Schienen ist an den Innenseiten der Längsträger genügend Platz vorhanden zur klemmenden Verbindung der den Schienen zugeordneten Endstücke mit Pratzen an den Innenseiten der Längsträger.

Nachfolgend wird ein bevorzugtes Ausführungsbeispiel der Erfindung näher erläutert. In dieser zeigen:
- Fig. 1: eine prinzipielle Seitenansicht der am Heck eines Fahrzeugs montierten Hubladebühne in einer Betriebsstellung,
- Fig. 2: eine vergrößerte Darstellung eines Teils der Hubladebühne der Fig. 1,
- Fig. 3: eine perspektivische Darstellung eines in Fahrtrichtung gesehen vorderen Endbereichs von Schienen der Hubladebühne,
- Fig. 4: eine Seitenansicht der Darstellung der Fig. 3,
- Fig. 5: eine Ansicht auf die vorderen Enden der gemäß der Fig. 3 am Fahrzeug montierten Schienen der Hubladebühne,

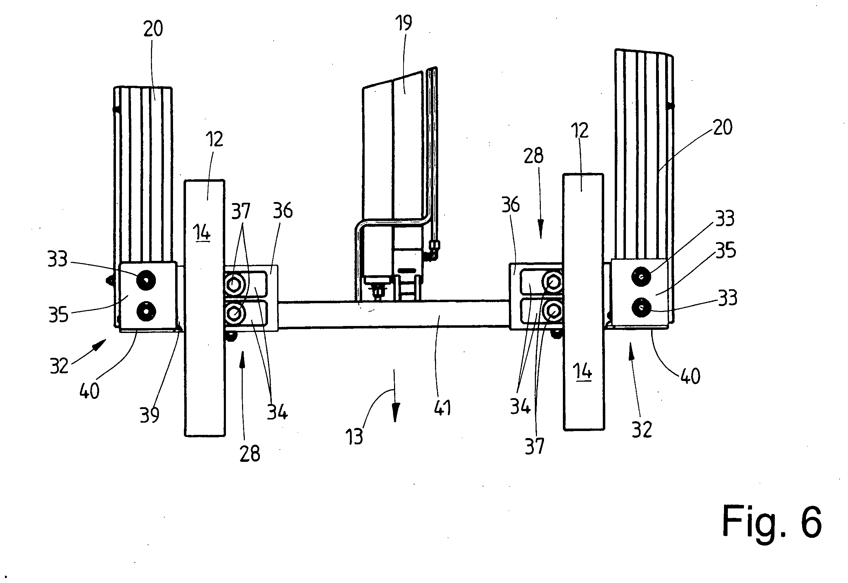

- Fig. 6: eine Draufsicht auf die gemäß der Fig. 3 mit vorderen Enden am Fahrzeug befestigten Schienen der Hubladebühne,
- Fig. 7: einen Schnitt VII-VII in der Fig. 6 durch einen Querträger,
- Fig. 8: eine perspektivische Ansicht eines Endstücks an einem vorderen Ende der jeweiligen Schiene, und
- Fig. 9: eine perspektivische Ansicht des Endstücks der Fig. 8 aus einer anderen Blickrichtung.

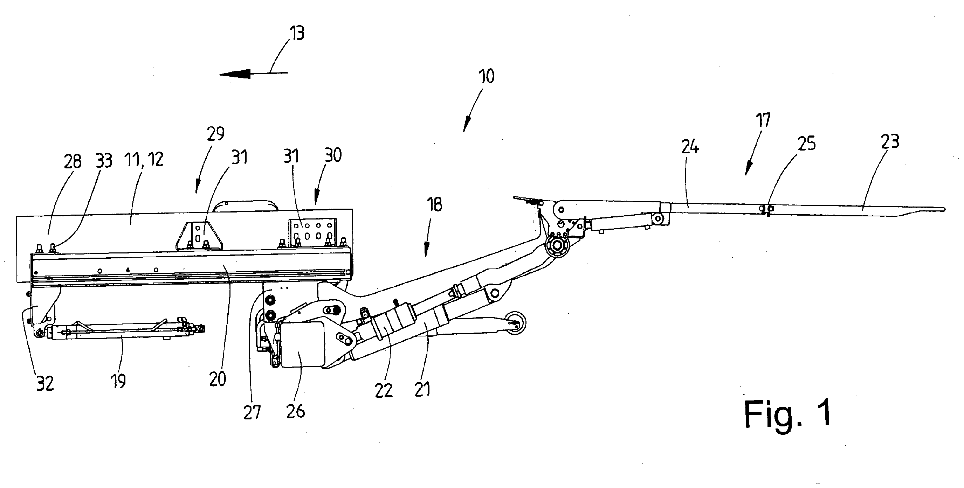

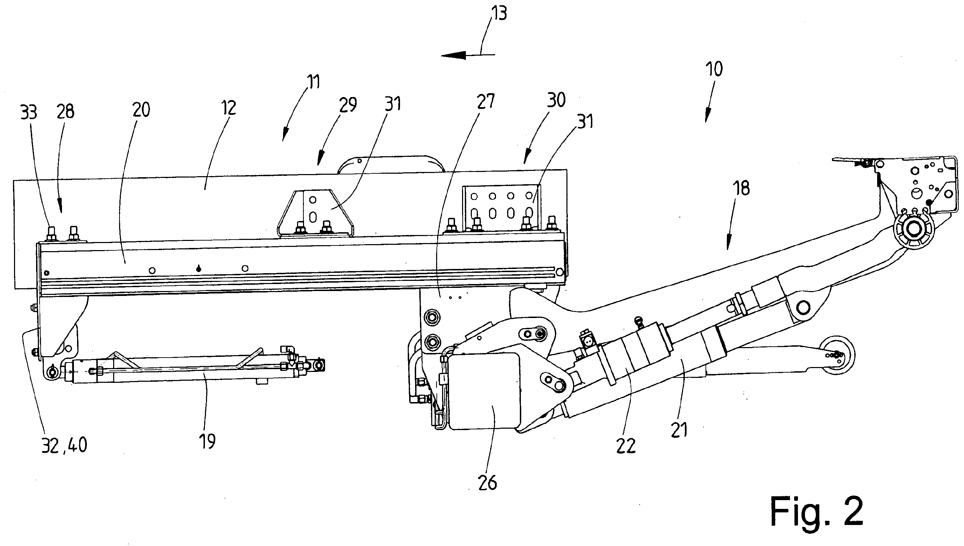

Die Figuren zeigen eine sogenannte unterziehbare Hubladebühne 10. Die Hubladebühne 10 ist in einem rückwärtigen Bereich eines Fahrzeugs angeordnet. In den Figuren sind nur teilweise zwei das Chassis 11 des Fahrzeugs bildende Längsträger 12 dargestellt. Die Längsträger 12 verlaufen parallel zueinander in Fahrtrichtung 13 des Fahrzeugs. Dabei sind die Längsträger 12 auf gegenüberliegenden Seiten einer Längsmittelachse des Fahrzeugs außen neben den Längsträgern 12 angeordnet, und zwar mit gleichmäßigem Abstand von der Längsmittelachse. Die Hubladebühne 10 befindet sich an der Rückseite des Fahrzeugs, und zwar vorzugsweise einem gegenüber den Hinterrädern rückseitig überhängenden Teil des Aufbaus des Fahrzeugs. Bei Nichtgebrauch ist die Hubladebühne 10 eingefaltet und eingezogen, so dass sie sich vollständig unter dem rückwärtigen Teil des Aufbaus des Fahrzeugs befindet. In den Fig. 1 und 2 ist die Hubladebühne 10 in der ausgefalteten und ausgefahrenen Gebrauchsstellung dargestellt.

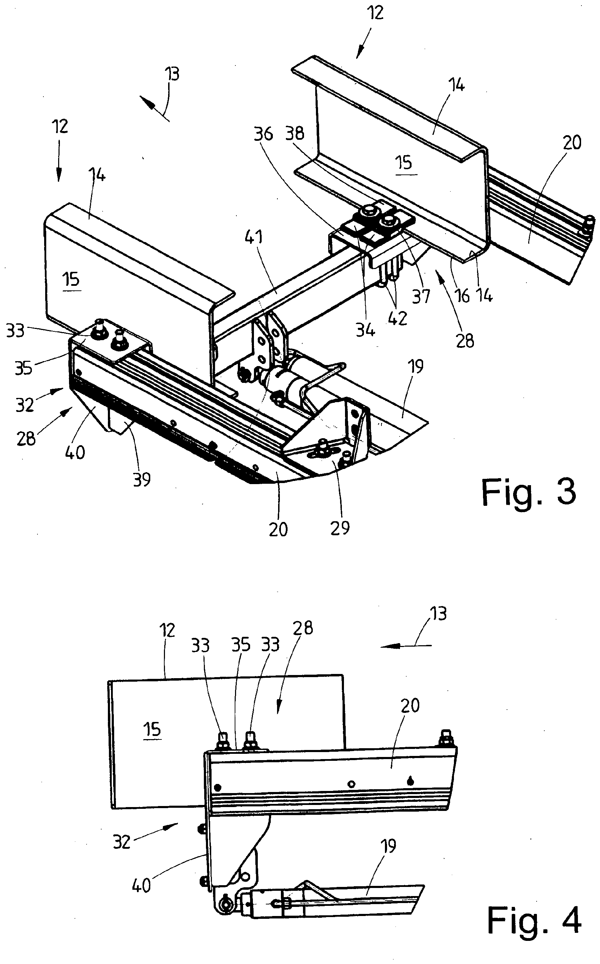

Die beiden gleich ausgebildeten Längsträger 12 verfügen über ein einseitig offenes C-förmiges Profil. Die offenen Seiten der Längsträger 12 sind zueinander gerichtet (Fig. 3). Das C-förmige Profil jedes Längsträgers 12 ist gebildet aus zwei parallelen, horizontalen Schenkeln 14 und einem diesen verbindenden äußeren Steg 15. Der Steg 15 ist vertikal ausgerichtet. Sowohl die Schenkel 14 als auch der Steg 15 jedes Längsträgers 12 verlaufen in Längsrichtung bzw. Fahrtrichtung 13 des Fahrzeugs. Infolge der zueinandergerichteten offenen Seiten der C-förmigen Längsträger 12 weisen freie Längskanten 16 der Schenkel 14 der beiden parallelen Längsträger 12 zueinander, wobei die Längskanten 16 in Fahrtrichtung 13 des Fahrzeugs verlaufen.

Die Hubladebühne 10 wird im Wesentlichen gebildet aus einer Ladeplattform 17, einem Hubwerk 18 zum Verschwenken, Heben und Senken der Ladeplattform 17 und zwei parallelen Schienen 20, an denen das Hubwerk 18 mit der Ladeplattform 17 in Fahrtrichtung 13 in die Ruhestellung verfahrbar und gegen die Fahrtrichtung 13 aus der Ruhestellung in die in den Fig. 1 und 2 gezeigte Betriebsstellung herausfahrbar ist, so dass dann die Ladeplattform 17 und ein Teil des Hubwerks 18 nach hinten gegenüber dem Aufbau des Fahrzeugs vorsteht. Durch mindestens einen Druckmittelzylinder 19 erfolgt das Einziehen und Ausfahren der Hubladebühne 10 längs der Schienen 20. Durch Hubzylinder 21 und Schwenkzylinder 22 erfolgt das Verschwenken bzw. Anheben oder Absenken der Ladeplattform 17.

Die Ladeplattform 17 ist im gezeigten Ausführungsbeispiel aus zwei etwa gleich großen Ladeplattformteilen 23, 24 gebildet, die um eine horizontale, quer zur Fahrtrichtung 13 verlaufende Scharnierachse 25 zum Überführen der Hubladebühne 10 in die unter das Heck des Fahrzeugs gezogene Ruhestellung zusammenklappbar sind. In der in den Fig. 1 und 2 gezeigten Betriebsstellung sind die Ladeplattformteile 23 und 24 auseinandergeschwenkt, so dass ihre Oberseiten in etwa einer Ebene liegen.

Das Hubwerk 18 weist ein quer zur Fahrtrichtung 13 verlaufendes Tragrohr 26 bzw. ist am Tragrohr 26 befestigt. An jedem der gegenüberliegenden Endbereiche des Tragrohrs 26 ist jeweils eine in einer vertikalen, parallel zur Fahrtrichtung 13 verlaufenden Ebene liegende Lasche 27 angeordnet. Jede Lasche 27 ist verfahrbar in oder an der jeweiligen Schiene 20 gelagert, vorzugsweise mit einem Laufwagen. Auf diese Weise kann das Tragrohr 26 mit dem Hubwerk 18 und der von diesem getragenen Ladeplattform 17 an den Schienen 20 in Fahrtrichtung 13 und gegen die Fahrtrichtung 13 verfahren werden. Dazu sind die Längen der Schienen 20 so bemessen, dass die Hubladebühne 10 bei eingeklappter Ladeplattform 17 vollständig oder zumindest größtenteils unter dem Heckbereich des Fahrzeugs einziehbar ist. Bei vollständig eingezogener Hubladebühne 10 befinden sich das Hubwerk 18 und die eingeklappte Ladeplattform 17 unterhalb der Schienen 20 und infolge einer Anordnung der Schienen 20 außen neben den Längsträgern 12 auch unter den Längsträgern 12 des Chassis 11 des Fahrzeugs.

Jede außen neben einem der beiden Längsträger 12 angeordnete Schiene 20 ist mit demjenigen Längsträger 12, neben dem sie positioniert ist, mehrfach verbunden. Im gezeigten Ausführungsbeispiel (Fig. 1 und 2) erfolgt die Verbindung jeder Schiene 20 mit dem ihr zugeordneten Längsträger 12 an drei Verbindungsstellen 28, 29, 30. Die drei Verbindungsstellen 28, 29 und 30 folgen in Fahrtrichtung 13 des Fahrzeugs gesehen mit Abstand aufeinander. Eine vordere Verbindungsstelle 28 ist einem in Fahrtrichtung 13 gesehen vorderen, also zu den Vorderrädern weisenden, Endbereich der jeweiligen Schiene 20 zugeordnet. Die gegenüberliegende Verbindungsstelle 30 befindet sich am hinteren Endbereich der jeweiligen Schiene 20. Zwischen den gegenüberliegenden Endbereichen der der Schiene 20 zugeordneten Verbindungsstellen 28, 30 befindet sich die dritte Verbindungsstelle 29, und zwar im gezeigten Ausführungsbeispiel etwas gegenüber der Mitte nach hinten versetzt. An den Verbindungsstellen 29 und 30 ist die jeweilige Schiene 20 auf konventionelle Weise mit Montagewinkeln 31 von außen gegen den vertikalen Steg 15 des jeweiligen Längsträgers geschraubt (Fig. 3).

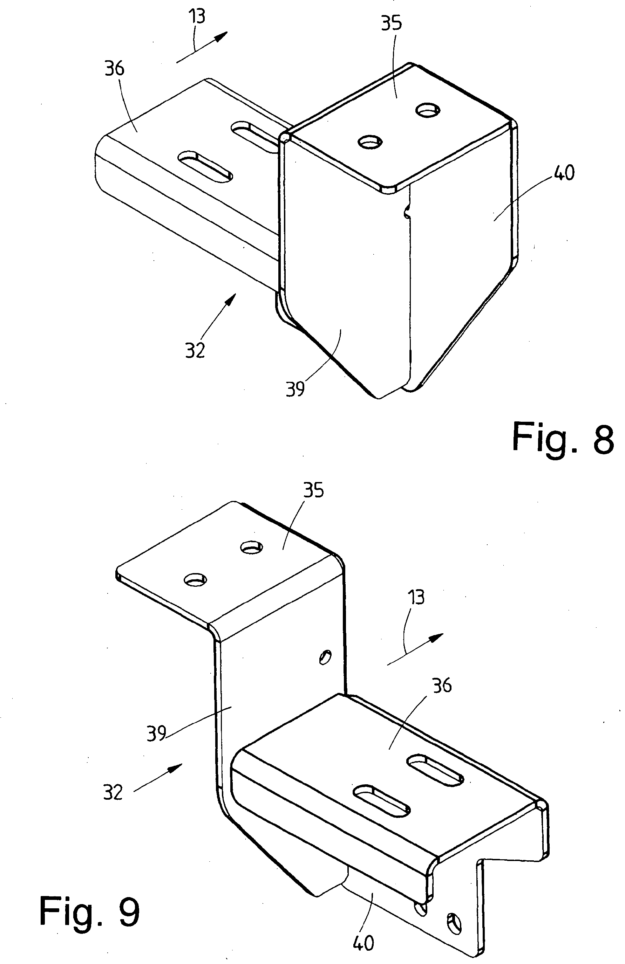

In besondere Weise sind die vorderen Verbindungsstellen 28 ausgebildet. An diesen Verbindungsstellen 28 erfolgt ein Befestigen der vorderen Endbereiche der Schienen 20 an den Längsträgern 12 durch Klemmen und/oder Klammern. Dazu ist an den vorderen Endbereichen der Schienen 20 jeweils ein Endstück 32 vorgesehen, das perspektivisch in den Fig. 8 und 9 dargestellt ist. Beide Endstücke 32 sind prinzipiell gleich ausgebildet, aber spiegelverkehrt. Jedes Endstück 32 ist mit dem vorderen Endbereich der betreffenden Schiene 20 durch Schraubenverbindungen 33 verschraubt. Außerdem ist jedes Endstück 32 so ausgebildet, dass es unter dem jeweiligen Längsträger 12 herum zur offenen Innenseite des C-förmigen Profils des Längsträgers 12 geführt ist. Diesem nach innen geführten Teil jedes Endstücks 32 sind zur Herstellung der Klemmverbindungen dienende Pratzen 34 zwischen dem Endstück 32 und dem ihm zugeordneten Längsträger 12 zugeordnet, und zwar im gezeigten Ausführungsbeispiel zwei parallele Pratzen 34. Gegebenenfalls können eine einzige Pratze 34 oder mehr als zwei Pratzen 34 vorgesehen sein.

Zum Verbinden des Endstücks 32 mit dem Endbereich des ihm zugeordneten Längsträgers 12 verfügt jedes Endstücks 32 über zwei Schraubplatten 35, 36, die quer zur Fahrtrichtung 13 nebeneinander angeordnet sind. Die Schraubplatten 35, 36 liegen in unterschiedlichen, parallelen horizontalen Ebenen. Eine höhere, äußere Schraubplatte 35 befindet sich außen neben dem Längsträger 12, während die niedrigere Schraubplatte 36 sich neben der Innenseite des Längsträgers 12 befindet, und zwar unter Anlage unter der Unterseite des unteren, horizontalen Schenkels 14 des Längsträgers 12. Mit der höheren, äußeren Schraubplatte 35 ist über die Schraubenverbindung 33 der vordere Endbereich der jeweiligen Schiene 20 verschraubt. Die innere, niedrigere Schraubplatte 36 jedes Endstücks 32 ist mit den beiden parallelen, nämlich in Fahrtrichtung 13 hintereinander angeordneten Pratzen 34 durch Schraubverbindungen 37 verschraubt. Jede Pratze 34 weist eine zum Längsträger 12 weisende Zunge 38 auf. Die jeweilige Zunge 38 übergreift die Längskante 16 des unteren, horizontalen Schenkels 14 des jeweiligen Längsträgers 12, indem sie die Oberseite des unteren Schenkels 14 überlappt.

Durch Anziehen der Schraubverbindungen 37 zur Verbindung der Pratzen 34 mit der Schraubplatte 36 der Endstücke 32 der Schienen 20 wird zwischen den Zungen 38 der Pratzen 34 und den Schraubplatten 36 der Endstücke 32 der unteren Schenkel 14 des jeweiligen Längsträgers 12 festgeklemmt und dadurch die klemmende bzw. klammernde Verbindung der vorderen Endbereiche der Schienen 20 mit den Längsträgern 12 herbeigeführt.

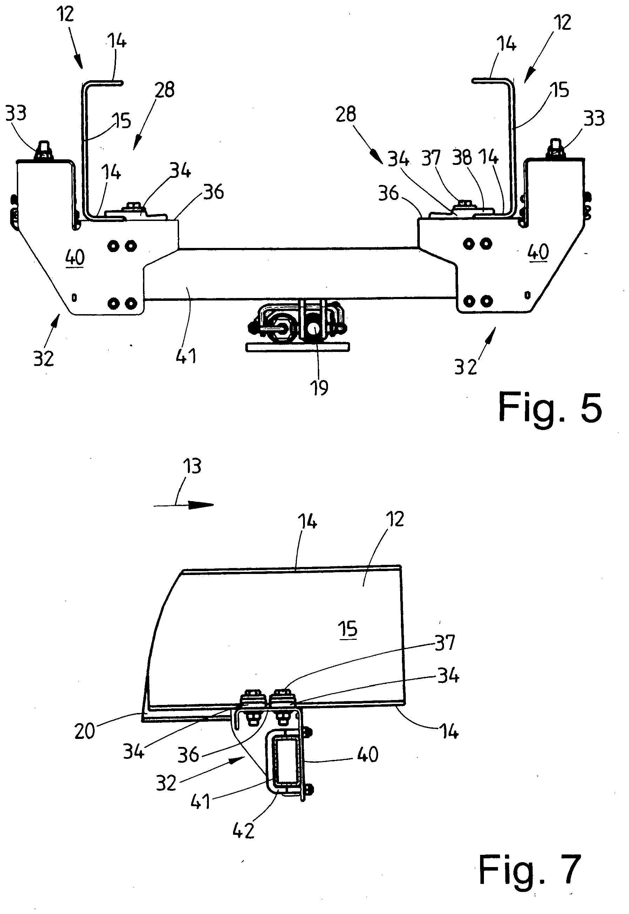

Die beiden in unterschiedlichen Ebenen liegenden Schraubplatten 36 jedes Endstücks 32 sind einstückig oder durch Schweißen verbunden durch eine vertikale Platte 39, die zwischen der Schiene 20 und den dieser zugeordneten Längsträgern 12 zu liegen kommt und eine quer zur Fahrtrichtung 13 in einer horizontalen Ebene liegende Stirnplatte 40 hinter der vorderen Stirnfläche der jeweiligen Schiene 20. Die Stirnplatte 40 weist ein etwa L-förmiges Profil auf und erstreckt sich so unter dem ihr zugeordneten Längsträger 12 hindurch zur Innenseite desselben. Die Stirnplatte 40 ist mit der die Pratzen 34 tragenden unteren Schraubplatte 36 einstückig oder durch Schweißen verbunden (Fig. 5).

Die beiden Endstücke 32 an den außenseitig den beiden Längsträgern 12 zugeordneten Schienen 20 sind zusätzlich durch einen Querträger 41 verbunden (Fig. 3). Gegenüberliegende Endereiche des quer zur Fahrtrichtung 13 verlaufenden, horizontalen Querträgers 41 sind an den Stirnplatten 40 der Endstücke 32 befestigt. Diese Befestigung erfolgt im gezeigten Ausführungsbeispiel auch durch Klemmen bzw. Klammern. Die klemmende Verbindung des gegenüberliegenden Querträgers 41 mit den Stirnplatten 40 der Endstücke 32 erfolgt jeweils durch zwei beabstandete U-förmige Schraubbügel 42. Es können auch nur ein oder mehr als zwei Schraubbügel 42 pro Verbindung vorgesehen sein. Die Schraubbügel 42 umgreifen drei Seiten des Querträgers 41 und sind mit parallelen Gewindeenden durch die Stirnplatte 40 hindurchgesteckt und außenseitig mit Muttern versehen. Durch Anziehen der Muttern wird jede Stirnplatte 40 gegen die in Fahrtrichtung 13 vornliegende senkrechte Wandung des Endbereichs des Querträgers 41 gedrückt und dadurch eine klemmende Verbindung zwischen dem jeweiligen Ende des Querträgers 41 und der diesem zugeordneten Stirnplatte 40 des Endstücks 32 hergestellt.

Bei der Montage der Hubladebühne 10 unter den parallelen Längsträgern 12 des Chassis 11 eines Fahrzeugs wird so vorgegangen, dass die sich in der eingezogenen Ruhestellung befindliche unbelastete Hubladebühne 10 in der vorgesehenen Position durch ein geeignetes Hubmittel angehoben und dadurch unter den Längsträgern 12 positioniert wird. Dabei sind die vorderen Endbereiche der Schienen 12 schon durch den Querträger 41 verbunden und auch die Endstücke 32 schon über die Schraubverbindungen 33 mit den Endbereichen der Schienen 20 fest verschraubt.

Nachdem die exakte Ausrichtung der Hubladebühne 10 unter den Längsträgern 12 des Fahrzeugs erfolgt ist, werden die vorderen Endbereiche der Schienen 20 an den Längsträgern 12 festgeklemmt durch Anziehen der Schraubverbindungen 37 der Pratzen 34. Hierdurch werden die unteren Schenkel 14 der Längsträger 12 zwischen den vorstehenden Zungen 38 der Pratzen 34 und der unter dem unteren Schenkel 14 der Längsträger 12 liegenden Schraubplatten 36 der Endstücke 32 eingeklemmt. Danach ist die sich in der eingezogenen Stellung befindende, unbelastete Hubladebühne 10 in der vorgesehenen Position zu den Längsträgern 12 nicht mehr veränderbar unter dem Chassis 11 des Fahrzeugs vormontiert. Nach diesem Vormontieren befindet sich aber schon die Hubladebühne 10 in der exakt vorgesehenen Relativposition unter den Längsträgern 12. Es können nun die Bohrungen für die Verschraubungen der übrigen Verbindungsstellen 29 und 30 der Schienen 20 mit den vertikalen Stegen 15 der Längsträger 12 erfolgen. Nachdem die Schienen 20 auch an den Verbindungsstellen 29 und 30 mit den Längsträgern 12 verschraubt sind, ist jedenfalls die mechanische Montage der Hubladebühne 10 am Fahrzeug abgeschlossen.

Es sind alternative Ausführungsbeispiele der Erfindung denkbar, bei denen mindestens die mittlere Verbindungsstellen 29 auch durch Klemmen mit insbesondere Pratzen gebildet sind, und zwar genauso und in gleicher Art wie die Verbindungsstellen 28. Gegebenenfalls können auch alle drei Verbindungsstellen 28, 29 und 30 oder nur die Verbindungsstellen 28 und 30 zum Klammern mit vorzugsweise Pratzen ausgebildet sein.

**Bezugszeichenliste:**

| | | | |
|---|---|---|---|
| 10 | Hubladebühne | 36 | Schraubplatte |
| 11 | Chassis | 37 | Schraubverbindung |
| 12 | Längsträger | 38 | Zunge |
| 13 | Fahrtrichtung | 39 | Platte |
| 14 | Schenkel | 40 | Stirnplatte |
| 15 | Steg | 41 | Querträger |
| 16 | Längskante | 42 | Schraubbügel |
| 17 | Ladeplattform | | |
| 18 | Hubwerk | | |
| 19 | Druckmittelzylinder | | |
| 20 | Schiene | | |
| 21 | Hubzylinder | | |
| 22 | Schwenkzylinder | | |
| 23 | Ladeplattformteil | | |
| 24 | Ladeplattformteil | | |
| 25 | Scharnierachse | | |
| 26 | Tragrohr | | |
| 27 | Lasche | | |
| 28 | Verbindungsstelle | | |
| 29 | Verbindungsstelle | | |
| 30 | Verbindungsstelle | | |
| 31 | Montagewinkel | | |
| 32 | Endstück | | |
| 33 | Schraubenverbindung | | |
| 34 | Pratze | | |
| 35 | Schraubplatte | | |

## Patentansprüche

1. Hubladebühne zur Anordnung im rückwärtigen Bereich eines Fahrzeugs mit einer Ladeplattform (17), die vorzugsweise aus mehreren zusammenklappbaren Ladeplattformteilen (23, 24) gebildet ist, einem Hubwerk (18) zum Verschwenken, Heben und Senken der Ladeplattform (17) und am Chassis (11), insbesondere parallelen Längsträgern (12) desselben, befestigbare Schienen (20), an denen das Hubwerk (18) mit der Ladeplattform (17) zwischen einer Ruhestellung und einer Gebrauchsstellung verfahrbar ist, wobei die in Fahrtrichtung (12) des Fahrzeugs verlaufenden, parallelen Schienen (20) an mehreren über die Längsrichtung jeder Schiene (20) mindestens teilweise durch Klammern bzw. Klemmen am Chassis (11) des Fahrzeugs befestigbar sind, **dadurch gekennzeichnet, dass** mindestens jede Schiene (20) im Bereich eines in Fahrtrichtung (13) vornliegenden Endbereichs durch Klammern bzw. Klemmen am Chassis (11) des Fahrzeugs befestigt ist und zumindest die hinteren Enden jeder Schiene (20) nicht durch Klammern, sondern in konventioneller Weise durch Schrauben mit dem Chassis (11) verbunden sind.

2. Hubladebühne nach Anspruch 1, **dadurch gekennzeichnet, dass** die Schienen (20) mit den Längsträgern (12) des Chassis (10) verbunden sind.

3. Hubladebühne nach Anspruch 1 oder 2, **dadurch gekennzeichnet, dass** bei Längsträgern (12) mit einseitig offenem C-Profil aus einem vertikalen Steg (15) und zwei parallelen, horizontalen Schenkeln (14) die offenen Seiten der C-Profile bzw. freie Längskanten (16) der Schenkel (14) zueinander gerichtet sind und das Klemmen bzw. Klammern der Schienen (20) an den unteren Schenkeln (14) der C-Profile zur Bildung der Längsträger (12) erfolgt, vorzugsweise von den bzw. über die freien Längskanten (16) der unteren Schenkel (14).

4. Hubladebühne nach einem der vorhergehenden Ansprüche, **dadurch gekennzeichnet, dass** am freien, vorderen Endbereich jeder Schiene (20) ein Endstück (32) befestigt ist, wobei mit dem Endstück (32) der vordere Endbereich der jeweiligen Schiene (20) am dazugehörenden Längsträger (12) durch Klemmen bzw. Klammern befestigbar ist.

5. Hubladebühne nach Anspruch 4, **dadurch gekennzeichnet, dass** jedes Endstück (32) zwei quer zur Fahrtrichtung (13) vorzugsweise höhenversetzt nebeneinanderliegende Schraubplatten (35, 36) aufweist, wobei eine Schraubplatte (35) an einer Schiene (20) befestigbar und die andere Schraubplatte (36) von unten gegen einen unteren Schenkel (14) des jeweiligen Längsträgers (12) klemmend befestigbar ist.

6. Hubladebühne nach Anspruch 5, **dadurch gekennzeichnet, dass** die eine Schraubplatte (36) des jeweiligen Endstücks (32) an dem dazugehörigen Längsträger (12) mittels mindestens einer an der Schraubplatte (36) befestigbaren, vorzugsweise anschraubbaren, Pratze (34) festgeklammert ist.

7. Hubladebühne nach Anspruch 6, **dadurch gekennzeichnet, dass** die jeweilige Pratze (34) in unterschiedlichen Positionen, vorzugsweise stufenlos veränderbaren Positionen, quer zur Fahrtrichtung (13) an der Schraubplatte (36) befestigbar ist.

8. Hubladebühne nach einem der vorhergehenden Ansprüche, **dadurch gekennzeichnet, dass** die beiden Schienen (20) vorzugsweise mit den an denselben befestigten Endstücken (32) durch mindestens einen Querträger (41) verbunden sind.

9. Hubladebühne nach Anspruch 8, **dadurch gekennzeichnet, dass** gegenüberliegende Endbereiche des Querträgers (41) mit jeweils einem Endstück (32) vorzugsweise klammernd oder klemmend verbunden sind.

10. Hubladebühne nach einem der vorhergehenden Ansprüche, **dadurch gekennzeichnet, dass** die Schienen (20) außen neben den Längsträgern (12) des Chassis (11) des Fahrzeugs befestigt sind, wobei das Festklammern bzw. Festklemmen der vorderen Endbereiche der Schienen (20) an den Längsträgern (11) von den offenen Innenseiten der als C-förmige Profile ausgebildeten Längsträger (12) erfolgt, vorzugsweise mittels der Pratzen (34).

## Claims

1. Cantilever lift for arranging in the rear region of a vehicle, with a loading platform (17) which is preferably formed from a plurality of loading platform parts (23, 24) which can be folded up, a lifting mechanism (18) for pivoting, raising and lowering the loading platform (17), and rails (20) which are fastenable to the chassis (11), in particular to parallel longitudinal members (12) thereof, and on which the lifting mechanism (18) together with the loading platform (17) is movable between an inoperative position and a use position, wherein the parallel rails (20) running in the direction of travel (12) of the vehicle are fastenable to the chassis (11) of the vehicle at a plurality of over the longitudinal direction of each rail (20) at least partially by clamping, **characterized in that** at least each rail (20) is fastened to the chassis (11) of the vehicle in the region of an end region lying in front in the direction of travel (13) by clamping, and at least the rear ends of each rail (20) are connected to the chassis (11) not by clamping, but rather in a conventional manner by screws.

2. Cantilever lift according to Claim 1, **characterized in that** the rails (20) are connected to the longitudinal members (12) of the chassis (10).

3. Cantilever lift according to Claim 1 or 2, **characterized in that**, in the case of longitudinal members (12) having a C profile which is open on one side and consists of a vertical web (15) and two parallel, horizontal limbs (14), the open sides of the C profiles or free longitudinal edges (16) of the limbs (14) are directed toward one another, and the clamping of the rails (20) to the lower limbs (14) of the C profiles in order to form the longitudinal members (12) takes place preferably from the or over the free longitudinal edges (16) of the lower limbs (14).

4. Cantilever lift according to one of the preceding claims, **characterized in that** an end piece (32) is fastened to the free front end region of each rail (20), wherein the front end region of the respective rail (20) is fastenable to the associated longitudinal member (12) with the end piece (32) by clamping.

5. Cantilever lift according to Claim 4, **characterized in that** each end piece (32) has two screw plates (35, 36) lying next to each other preferably offset in height transversely with respect to the direction of travel (13), wherein one screw plate (35) is fastenable to a rail (20) and the other screw plate (36) is fastenable from below against a lower limb (14) of the respective longitudinal member (12) in a clamping manner.

6. Cantilever lift according to Claim 5, **characterized in that** the one screw plate (36) of the respective end piece (32) is clamped on the associated longitudinal member (12) by means of at least one claw (34) which is fastenable, preferably screwable, to the screw plate (36).

7. Cantilever lift according to Claim 6, **characterized in that** the respective claw (34) is fastenable in different positions, preferably infinitely variably changeable positions, to the screw plate (36) transversely with respect to the direction of travel (13) .

8. Cantilever lift according to one of the preceding claims, **characterized in that** the two rails (20) are connected by at least one cross member (41) preferably by the end pieces (32) fastened to said rails.

9. Cantilever lift according to Claim 8, **characterized in that** opposite end regions of the cross member (41) are connected to one end piece (32) each preferably in a clamping manner.

10. Cantilever lift according to one of the preceding claims, **characterized in that** the rails (20) are fastened on the outside next to the longitudinal members (12) of the chassis (11) of the vehicle, wherein the clamping of the front end regions of the rails (20) to the longitudinal members (11) takes place from the open inner sides of the longitudinal members (12), which are in the form of C-shaped profiles, preferably by means of the claws (34).

## Revendications

1. Plate-forme de chargement élévatrice à disposer à l'arrière d'un véhicule avec une plate-forme de chargement (17), qui est formée de préférence de plusieurs parties de plate-forme de chargement rabattables (23, 24), un mécanisme de levage (18) pour faire pivoter, lever et abaisser la plate-forme de chargement (17) et des rails (20) pouvant être fixés au châssis (11), en particulier à des longerons parallèles (12) de celui-ci, sur lesquels le mécanisme de levage (18) avec la plate-forme de chargement (17) peut être déplacé entre une position de repos et une position d'utilisation, dans laquelle les rails parallèles (20) s'étendant dans la direction de marche (12) du véhicule peuvent être fixés au châssis (11) du véhicule au moins en partie par des attaches ou des pinces en plusieurs sur la direction longitudinale de chaque rail (20), **caractérisée en ce qu'**au moins chaque rail (20) est fixé au châssis (11) du véhicule par des attaches ou des pinces dans la région d'une région d'extrémité située à l'avant dans la direction de marche (13) et au moins les extrémités arrière de chaque rail (20) ne sont pas assemblées au châssis (11) par des attaches, mais de façon conventionnelle par des vis.

2. Plate-forme de chargement élévatrice selon la revendication 1, **caractérisée en ce que** les rails (20) sont assemblés aux longerons (12) du châssis (10).

3. Plate-forme de chargement élévatrice selon une revendication 1 ou 2, **caractérisée en ce que** dans le cas de longerons (12) avec un profil en C ouvert d'un côté comportant une âme verticale (15) et deux ailes horizontales parallèles (14), les côtés ouverts des profils en C ou des bords longitudinaux libres (16) des ailes (14) sont dirigés l'un vers l'autre et on effectue le serrage ou la fixation des rails (20) aux ailes inférieures (14) des profils en C pour former les longerons (12), de préférence depuis les ou sur les bords longitudinaux libres (16) des ailes inférieures (14).

4. Plate-forme de chargement élévatrice selon l'une quelconque des revendications précédentes, **caractérisée en ce qu'**une pièce d'extrémité (32) est fixée à la région d'extrémité avant libre de chaque rail (20), dans laquelle la région d'extrémité avant du rail respectif (20) avec la pièce d'extrémité (32) peut être fixée au longeron correspondant (12) par des pinces ou des attaches.

5. Plate-forme de chargement élévatrice selon la revendication 4, **caractérisée en ce que** chaque pièce d'extrémité (32) présente deux plaques à visser (35, 36) placées l'une à côté de l'autre, de préférence décalées en hauteur, transversalement à la direction de marche (13), dans laquelle une plaque à visser (35) peut être fixée à un rail (20) et l'autre plaque à visser (36) peut être fixée par le bas par serrage contre une aile inférieure (14) du longeron respectif (12).

6. Plate-forme de chargement élévatrice selon la revendication 5, **caractérisée en ce qu'**une première plaque à visser (36) de la pièce d'extrémité respective (32) peut être attachée au longeron respectif (12) au moyen d'au moins une griffe (34) pouvant être fixée, de préférence vissée, à la plaque à visser (36).

7. Plate-forme de chargement élévatrice selon la revendication 6, **caractérisée en ce que** la griffe respective (34) peut être fixée à la plaque à visser (36) dans différentes positions, de préférence dans des positions pouvant changer de façon continue transversalement à la direction de marche (13).

8. Plate-forme de chargement élévatrice selon l'une quelconque des revendications précédentes, **caractérisée en ce que** les deux rails (20) de préférence avec les pièces d'extrémité (32) fixées à ceux-ci sont assemblés par au moins une traverse (41).

9. Plate-forme de chargement élévatrice selon la revendication 8, **caractérisée en ce que** des régions d'extrémité opposées de la traverse (41) chacune avec une pièce d'extrémité (32) sont assemblées de préférence par des attaches ou par serrage.

10. Plate-forme de chargement élévatrice selon l'une quelconque des revendications précédentes, **caractérisée en ce que** les rails (20) sont fixés extérieurement à côté des longerons (12) du châssis (11) du véhicule, dans laquelle on effectue la fixation ou le serrage des régions d'extrémité avant des rails (20) sur les longerons (11) à partir des côtés intérieurs ouverts des longerons (12) formés par des profils en C, de préférence au moyen des griffes (34).
